# EUROPEAN PATENT APPLICATION

(11) **EP 2 065 237 A2**
(43) Date of publication of application: **03.06.2009**
(21) Application number: 08380322.1
(22) Date of filing: 19.11.2008
(51) Int. Cl.: B60J 5/04

(54) **Door for automobiles**

(30) Priority: 29.11.2007 ES 200702477 U
(71) Applicant: Seat, S.A., 08760 Martorell, Barcelona (ES)
(72) Inventor: Torres Paisal, Manuel, 08760 Martorell Barcelona (ES); Pinedo Zarate, Jesus, 08760 Martorell Barcelona (ES); Roig Margarit, Ramón, 08760 Martorell Barcelona (ES)
(74) Representative: Carvajal y Urquijo, Isabel

(57) **Abstract**

The invention relates to a door for automotive vehicles, comprising a framework defining an upper window casing (1), on which an inner sheet metal frame (2) is fixed and assembled. The upper casing (1) of the framework and the inner frame have mutual supports limiting the maximum penetration or coupling position of the inner frame in the upper casing. Said supports are made up of opposable indentations formed in the casing and frame. The mentioned indentations consist of a continuous indentation running along the profile of the upper casing (1), projecting towards the side on which the frame is applied, and of a series of discontinuous indentations (4) formed along the profile of the frame, projecting towards the upper casing, which discontinuous indentations are supported on the continuous indentation (3) of the upper casing, limiting the coupling position of the frame in the casing.

## Description

### Field of the Invention

The present invention relates to a door for automobiles and more specifically to a door for automobiles made up of a sheet metal framework forming an upper window casing, on which an inner sheet metal framework is assembled and fixed.

### Background of the Invention

In doors for automobiles of the type set forth, the upper casing of the framework of the door is designed as a ribbed profile, along which the inner sheet metal frame is fixed and coupled, also in the form of a ribbed profile.

This coupling is carried out by opposing and placing the convex surface of the profile of the inner frame against the concave surface of the profile of the upper casing. The support between the two profiles is carried out through the opposite surfaces of their walls, with a divergent outline. This allows the coupling between profiles to vary, since-there are no means effectively-limiting the penetration of the profile of the inner frame into the profile of the upper casing.

### Description of the Invention

The object of the present invention is to eliminate the problems set forth by means of a makeup ensuring a fixed maximum coupling position between the upper casing and the inner frame, which will correspond to the correct fixing position between both components.

To that end, according to the invention, the upper casing and the inner frame have mutual supports limiting the maximum penetration or coupling position of the inner frame in the upper casing. These supports are defined by opposable indentations which are formed at least in the upper casing and preferably in the upper casing and in the inner frame.

According to a preferred embodiment, the supports consist of a continuous indentation running along the profile of the upper casing, projecting towards the side on which the frame is applied, and of a series of discontinuous indentations formed along the profile of the frame, projecting towards the upper casing. The discontinuous indentations are made in the inner frame such that they are opposite the continuous indentation of the upper casing, when said inner frame is coupled in the upper casing, such that when the inner frame reaches the definitive coupling position, the discontinuous indentations of said frame are supported on the continuous indentation of the upper casing.

With this makeup the assembly of the profile of the inner frame in the upper casing can be carried out with total confidence of achieving the correct coupling position, since such position will be defined by the support of the discontinuous indentations of the inner frame on the continuous indentation of the upper casing.

### Brief Description of the Drawings

The attached drawings show a non-limiting embodiment, with the description of which the features of the door of the invention and the advantages derived therefrom can be better understood.

In the drawings:
Figure 1 is a partial perspective view of the upper casing of the framework of an automobile door, with traditional makeup.
Figure 2 is a cross-section view of the upper casing of an automobile door with traditional makeup, taken according to section line II-II of Figure 1.
Figure 3 is a partial perspective view of the framework of an automobile door, including the upper casing, made up according to the invention.
Figure 4 is a cross-section view of the casing of a door, made up according to the invention and taken according to section line IV-IV of Figure 3.
Figure 5 is a longitudinal section view of the casing of the framework of a door, made up according to the invention and taken according to section line V-V of Figure 3.
Figure 6 shows a perspective view of the initial operation of assembling or coupling the inner frame in the upper casing of a door, made up according to the invention
Figure 7 shows a section view of the definitive assembly or coupling position of the inner frame in the upper casing.

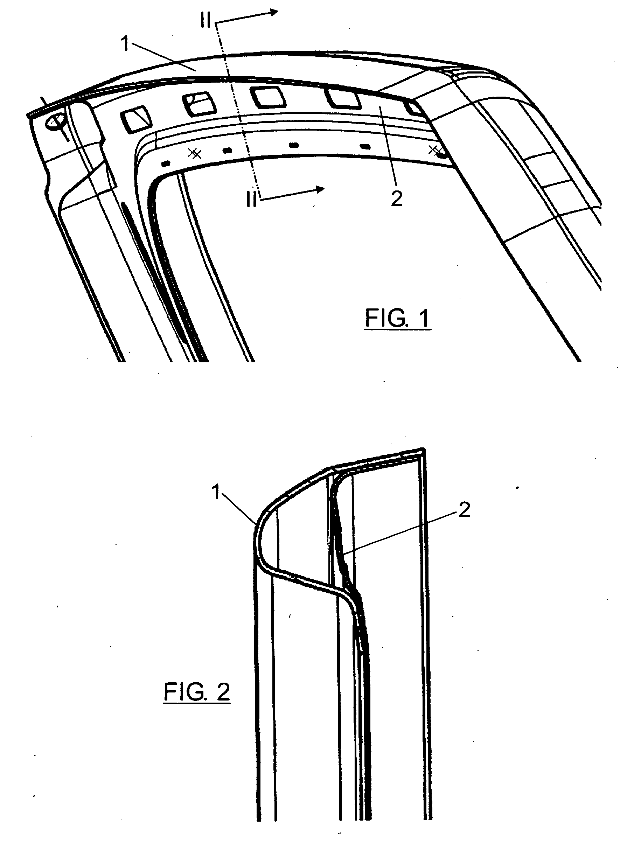

Figures 1 and 2 show the traditional makeup of the upper part of the framework of a door for automobiles, the framework of which forms an upper casing 1, in the form of a ribbed profile, on which an inner frame 2, also made up of a ribbed sheet metal profile, is assembled and fixed.

The profiles formed by the casing 1 and inner frame 2 have a ribbed configuration, with slightly divergent walls. The convex surface of the profile formed by the inner sheet metal frame 2 is opposite the concave surface of the upper casing 1, being coupled to one another in this position, such that the profile of the inner frame 2 can penetrate more or less into the profile formed by the upper casing 1, since there are no elements limiting this penetration.

This circumstance allows the final coupling position, in which the inner frame 2 is fixed in the upper casing 1, to vary, depending on the two profiles pressing against one another more or less.

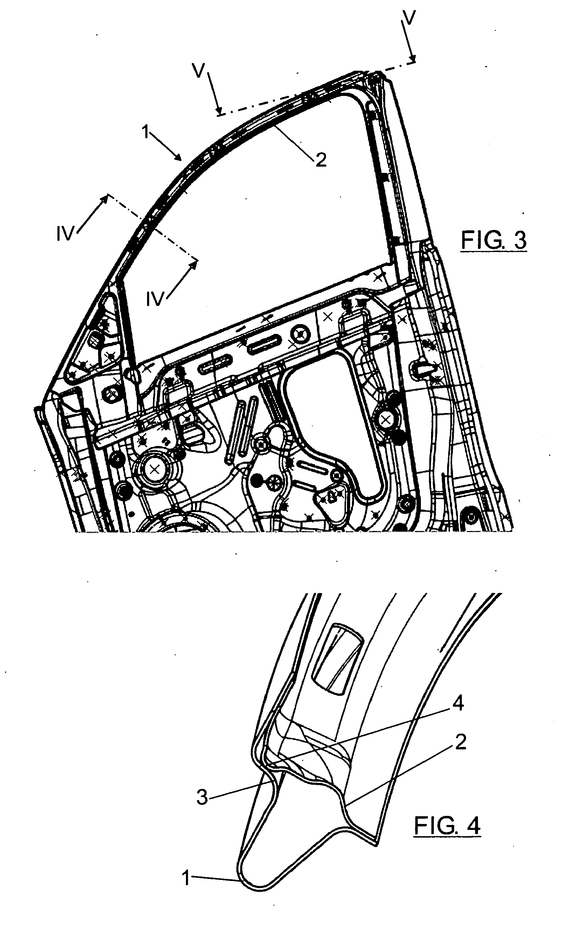

Figures 3 to 5 show a door made up according to the invention, which in its upper part has a casing 1 in which an inner sheet metal frame 2 is coupled and fixed.

According to the invention, a continuous indentation 3 is formed in the profile of the upper casing 1, along the entire profile, which indentation forms a step which is opposite the profile of the inner frame 2, defining a support for said frame, which will serve to limit the penetration of this inner frame 2 into the upper casing 1.

With this makeup, the final coupling position of the inner frame 2 in the upper casing 1 is defined and limited by the continuous indentation 3, since the inner frame 2 will be supported on it, limiting its penetration.

Discontinuous indentations 4 projecting towards the upper casing 1 will preferably be made in the inner frame 2, which indentations will define support points on the continuous indentation 3 of said casing.

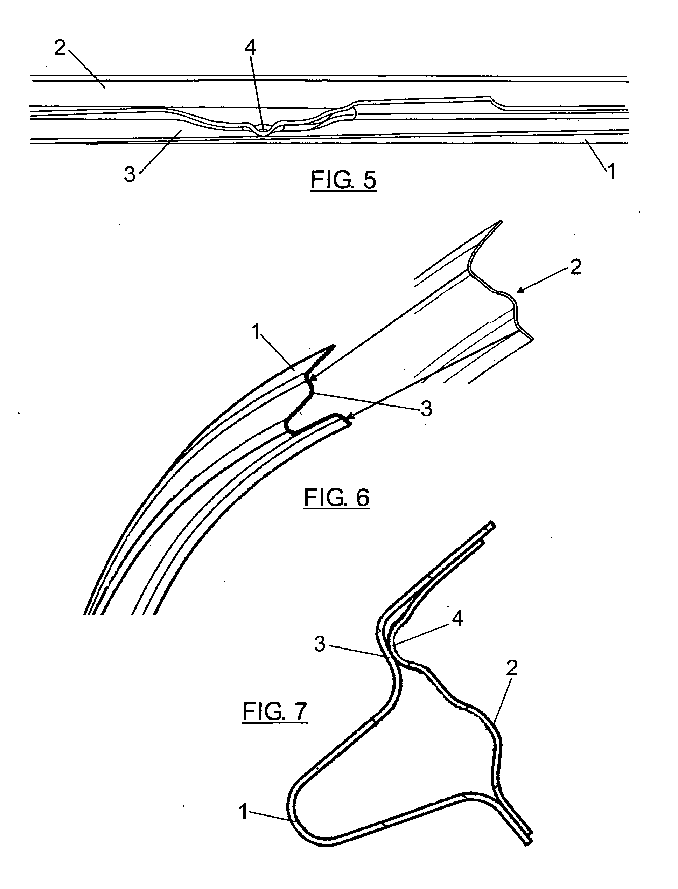

Figure 5 shows these discontinuous indentations 4 of the inner frame 2 which will be supported on the continuous indentation 3 of the upper casing 1.

With the described makeup, as shown in Figure 6, to couple the inner frame 2 in the upper casing 1 said inner frame 2 is positioned and is introduced in the upper casing 1 until achieving the position of Figure 7, in which the localized indentations 4 of the inner frame 2 are supported on the continuous indentation 3 of the upper casing 1.

An exact coupling of the inner frame in the upper casing, along the entire length of said casing, is achieved by means of the mentioned indentations, these components later being able to be joined by welding, following traditional processes and ways.

## Claims

1. A door for automotive vehicles, comprising a framework defining an upper window casing, on which an inner sheet metal frame is fixed and assembled, **characterised in that** the upper casing of the framework and the inner frame have mutual supports limiting the maximum penetration or coupling position of the inner frame in the upper casing; which supports are made up of opposable indentations formed in the casing and frame.

2. The door according to claim 1, **characterised in that** the mentioned indentations consist of a continuous indentation running along the profile of the upper casing, projecting towards the side on which the frame is applied, and of a series of discontinuous indentations formed along the profile of the frame, projecting towards the upper casing, which discontinuous indentations are supported on the continuous indentation of the upper casing, limiting the coupling position of the frame in the casing.
